Europäisches Patentamt

European Patent Office

Office européen des brevets

(11) Publication number: **0 519 163 A1**

# EUROPEAN PATENT APPLICATION

(21) Application number: **92104517.5**

(22) Date of filing: **16.03.92**

(51) Int. Cl.⁵: **H02K 5/22, H02K 37/14**

(30) Priority: **17.06.91 JP 144475/91**

(43) Date of publication of application:
**23.12.92 Bulletin 92/52**

(84) Designated Contracting States:
**DE FR GB**

(71) Applicant: **MATSUSHITA ELECTRIC INDUSTRIAL CO., LTD.**
**1006, Oaza Kadoma**
**Kadoma-shi, Osaka-fu, 571(JP)**

(72) Inventor: **Ikkai, Yasufumi**
**2-8-7, Uozaki-minamimachi**
**Higashinada-ku, Kobe-City 658(JP)**

(74) Representative: **Jung, Elisabeth, Dr. et al**
**Dr. Elisabeth Jung Dr. Jürgen Schirdewahn**
**Dipl.-Ing. Claus Gernhardt Patentanwälte**
**Clemensstrasse 30 Postfach 40 14 68**
**W-8000 München 40(DE)**

(54) **Wire-connecting configuration of a resin-molded electric motor.**

(57) In a wire-connecting configuration of a resin-molded stepping motor: conductive terminals (3) are integrated with bobbins (2) around which coils (1) are wound; ends of wires of the coils (1) are wound around wire winding parts (3b) of the terminals (3), respectively, and lead wires (4), which are connected to external electric power source, are fixed on wire-clip parts 3a of the terminals (3), respectively.

FIG.1

## BACKGROUND OF THE INVENTION

### 1. FIELD OF THE INVENTION

The present invention relates to an improvement in wire-connecting configuration of a resin-molded electric motor, and especially relates to wire-connecting configuration between a coil which is wound around a bobbin and lead wires in a resin-molded electric motor.

### 2. DESCRIPTION OF THE PRIOR ART

It is known that an electric motor such as a stepping motor comprises a stator having coils, which are, for example, formed by winding a surface-insulated solid wire around a bobbin and a rotor having permanent magnet parts, which is rotatively borne at a center of an inner space of the stator. And the stepping motor generates a torque on the rotor when electric power is supplied to the coil. In such a motor, ends of wires of the coil are generally connected to lead wires, since the electric power is supplied to the coil via the lead wires from an external electric power source.

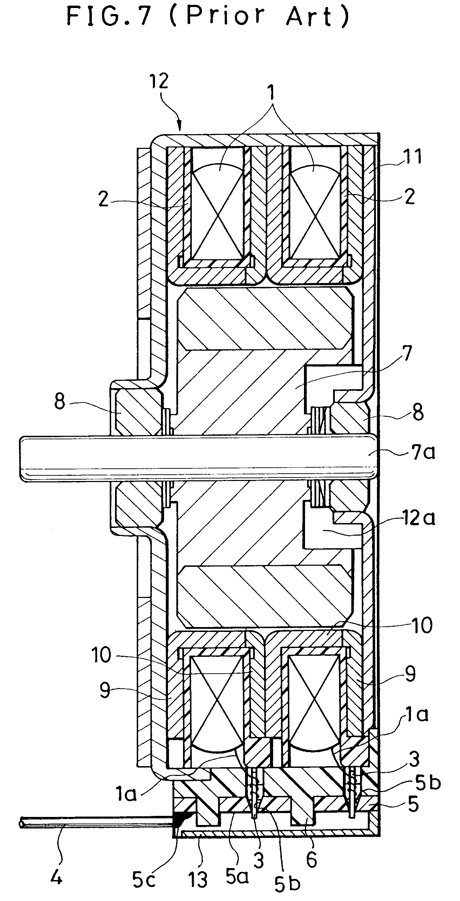

A constitution of a conventional stepping motor is described referring to FIG.7. As shown in FIG.7, the conventional stepping motor comprises a rotor 7 and a stator 12. The rotor 7 is rotatively borne at a center of inner space 12a of the stator 12 by bearings 8. The stator 12 consists of plural coils 1 which are wound around bobbins 2, respectively and arranged serially in a direction parallel to the rotation axis 7a of the rotor 7. Terminals 3 are provided on the bobbins 2, and ends 1a of wires of the coils 1 are wound around the terminals 3, respectively, and the coils 1 are electrically connected to the terminals 3. Lead wire(s) 4 is(are) soldered on conductive part(s) of the surface 5a of a printed circuit substrate 5. The printed circuit substrate 5 has plural holes 5b, through which the terminals 3 penetrate to the surface 5a. And the terminals 3 are also soldered on conductive parts of the surface 5a, respectively. Thereby, the coils 1 are electrically connected to the lead wires 4 by way of the terminals 3 and the printed circuit substrate 5.

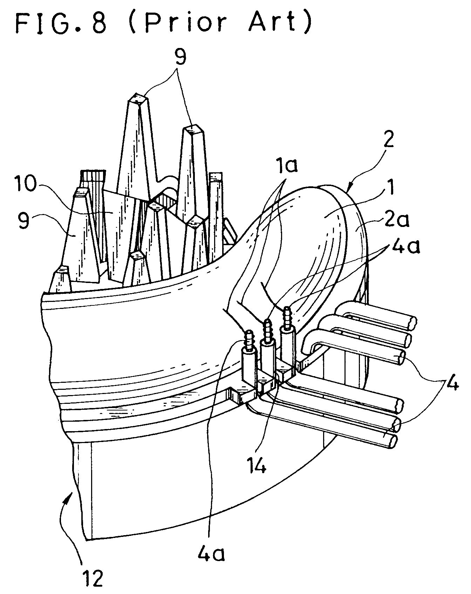

Another conventional wire-connecting configuration of a stepping motor is described referring to FIG.8. In FIG.8, lead wires 4 are fit and fixed to guide grooves 14 which are formed on outer periphery of a flange part 2a of the bobbin 2. Ends 1a of the wires of the coils 1 are turned several times around ends of the lead wires 4, respectively. And connecting parts of the coils 1 and the lead wires 4 are soldered. Thereby, the coils 1 and the lead wires 4 are electrically connected.

If the conventional stepping motors having the above-mentioned wire-connecting configuration are resin-molded, the former conventional stepping motor shown in FIG.7 has such disadvantages that soldered parts are destructed by pressure of the resin which is, for example, injected to be molded, and that the solder 5c on the printed circuit substrate 5 is cracked by circumferential severe temperature change (especially by a phenomenon called heat-shock). As a result, electric current is not supplied to the coils 1 through the lead wires 4 and/or the printed circuit substrate 5. Furthermore, the former conventional stepping motor also has a disadvantage of expensiveness due to the use of the printed circuit substrate 5.

On the other hand, the latter conventional stepping motor shown in FIG.8 has no problem in respect of the strength and the reliability even when the melted resin is injected for forming a resin-molding (not shown in the figures). The latter conventional stepping motor, however, has a disadvantage of high cost due to the steps of manual winding of the wires of the coils 1 around the lead wires 4, since both of the wires of the coil 1 and the lead wires 4 have flexibility and thereby a delicate manual operation has been necessary.

## SUMMARY OF THE INVENTION

Purpose of the present invention is to provide an improved wire-connecting configuration of a resin-molded stepping motor wherein wire-connecting parts have a sufficient mechanical strength and a reliability against pressure of resin which is injected for forming a resin-molding, and that the wire-connecting steps is simplified.

Wire-connecting configuration of a resin-molded stepping motor in accordance with the present invention comprises:

at least one bobbin having a circular center hole wherein a rotor is to be borne rotatively;

at least one coil wound around the bobbin; and

at least two terminals which are fixed on the bobbin and have a wire-winding part, whereto end of a wire of the coil is wound and electrically connected, and a wire-clip part, whereto conductor-wire of a lead wire is clipped and electrically connected.

In the wire-connecting configuration of a resin-molded stepping motor in accordance with the present invention as configured above, the terminals are press-fit to or molded integrally with the bobbin, and the coil is wound around the bobbin. And the ends of the wire of the coil are wound around and soldered on the wire winding parts of the terminals, respectively. After that, the conductor-wires of the lead wires are fixed on the wire-clip parts of the terminals. Thereby, the coil and the lead wires are electrically connected and mechanically fixed to each other.

The terminal has a high rigidity and is fixed on the bobbin, and therefore winding operation of the end of the wire of the coil around the wire winding part of the terminal becomes relatively easy in comparison with that of the conventional stepping motor, for example, shown in FIG.8. Furthermore, as the terminals are close to the coil, the end part of the wire of the coil is far seldom broken by pressure of the resin injected for forming a resin-molding, in comparison with that of the conventional stepping motor. Since the lead wires are fixed on the terminals, the connection of the lead wires and the terminals has sufficient mechanical strength against the pressure of the injected resin, and thereby the connection of the lead wires and the terminals is seldom broken. Furthermore, since no printed circuit substrate is used for connecting the coil and the lead wires, the soldered part does not make crack by stress due to the sudden change of the circumferential temperature.

While the novel features of the invention are set forth particularly in the appended claims, the invention, both as to organization and content, will be better understood and appreciated, along with other objects and features thereof, from the following detailed description taken in conjunction with the drawings.

## BRIEF DESCRIPTION OF THE DRAWINGS

FIG.1 is a cross-sectional side view showing a constitution of a resin-molded stepping motor having a wire-connecting configuration in accordance with the present invention.

FIG.2 is a side view showing a stator assembly of the wire-connecting configuration of the stepping motor in accordance with the present invention before resin-molding process.

FIG.3 is a front view of the stator assembly shown in FIG.2.

FIG.4 is a perspective view showing a bobbin 2, a coil 1 wound around the bobbin 2 and terminals 3.

FIG.5 is a schematic cross-sectional side view showing a connection of an end of a wire of the coil 1 and the terminal 3.

FIGs.6 (a) to (f) are schematic front views showing embodiments of the terminal 3, respectively.

FIG.7 is the cross-sectional side view showing the constitution of the conventional stepping motor.

FIG.8 is a perspective view showing the conventional wire-connecting configuration of the other conventional stepping motor.

It will be recognized that some or all of the Figures are schematic representations for purposes of illustration and do not necessarily depict the actual relative sizes or locations of the elements shown.

## DESCRIPTION OF PREFERRED EMBODIMENTS

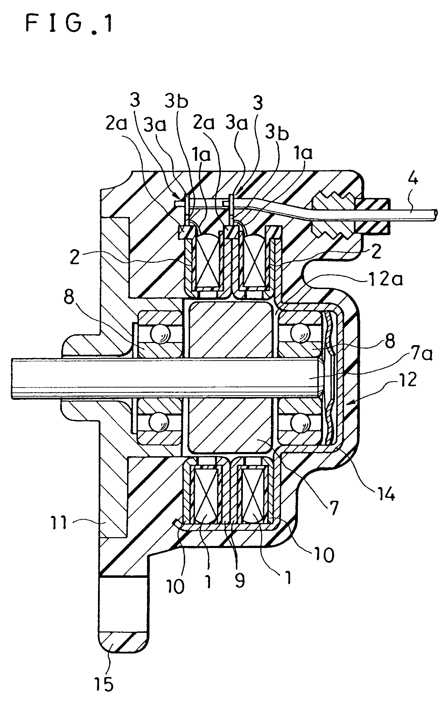

A preferred embodiment of a wire-connecting configuration of a resin-molded stepping motor is described referring to FIGs. 1 to 5.

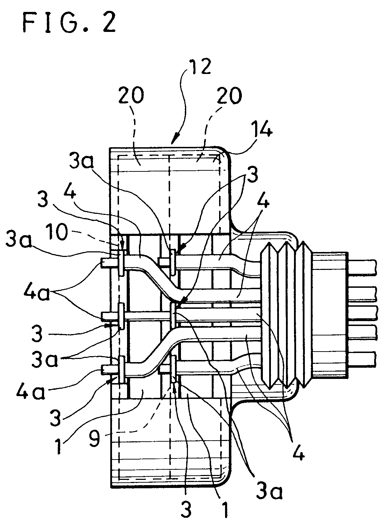

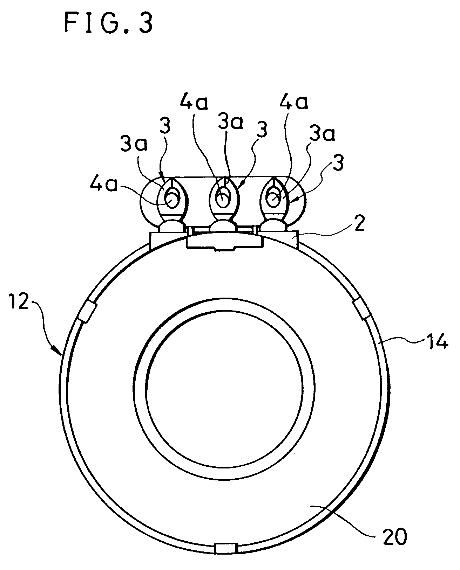

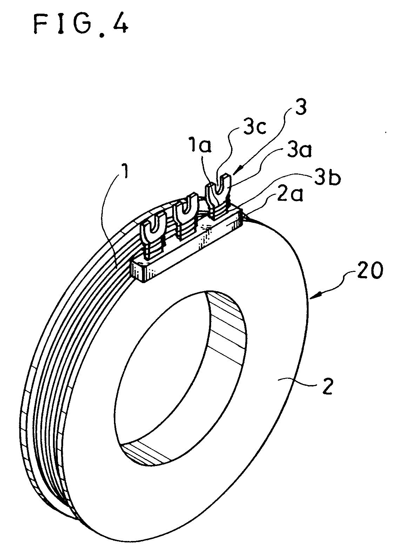

FIG.1 is a cross-sectional side view showing a constitution of a resin-molded stepping motor having a wire-connecting configuration in accordance with the present invention. FIG.2 is a side view and FIG.3 is a front view, respectively showing the stator assembly 12. FIG.4 is a perspective view showing an intermediate assembly that the coil 1 is wound around the bobbin 2.

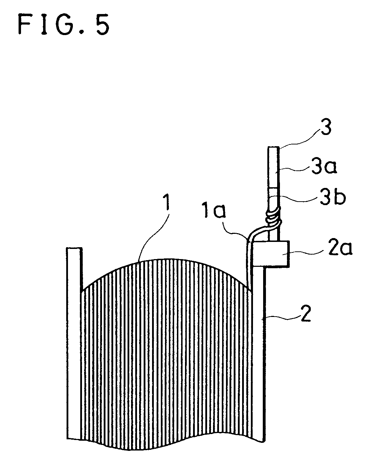

In FIG.1, the resin-molded stepping motor comprises a rotor assembly 7 and a stator assembly 12. The rotor assembly 7 is rotatively borne at a center of inner space 12a of the stator assembly 12 by bearings 8. The stator assembly 12 has a pair of bobbins 2, which are fit between an inner yoke 9 and an outer yoke 10, and respective coils 1 which are wound around the bobbins 2. Respective ones of the bobbins 2 with the coils 1 and the inner and outer yokes 9 and 10 are arranged in a direction parallel to the rotation axis 7a of the rotor assembly 7, and integrated by a holder 14. Terminals 3 are fixed on flange parts 2a of the bobbins 2, respectively. Conductive-wires (core wires) of lead wires 4 are fixed on wire-clip parts 3a of the terminals 3, respectively. As shown in FIG.5, end 1a of a wire of the coil 1 is wound around a wire winding part 3b of the terminal 3. The stator assembly 12 and a front cover 11 are fixed and integrated by a resin-molding 15. The stator assembly 12, the rotor assembly 7 and the front cover 11 are previously coupled and held in a die (not shown). And a melted resin is injected into the die for forming the resin-molding 15. When the resin is cooled and hardened, the resin-molded stepping motor shown in FIG.1 is obtained.

As shown in FIG.4 which is a perspective view showing an intermediate assembly 20, the coil 1 is wound around the bobbin 2. The terminal 3 is made of a conductive material such as copper and has the wire winding part 3b and the wire-clip part 3a having a cutting 3c. The wire winding part 3b is to be used for treating the end 1a of the wire of the coil 1. The wire-clip part 3a is to be used for connecting an external electric power source by way of the lead wire 4. The terminal 3 is fixed on the flange 2a of the bobbin 2 by press-fit or integral-molding. After winding the ends 1a of the wires of the coils 1 around the wire winding parts 3b as shown in FIGs.4 and 5, they are soldered or fused on the wire winding parts 3b of the terminal 3, as shown in FIGs. 4 and 5. As shown in FIGs. 2 and 3, the lead wires 4 are fit in and fixed by the cutting 3c of the wire-clip part 3a of the terminals 3.

FIGs.2 and 3 show the stator assembly 12. As shown in FIG.2, two intermediate assemblies 20 are fixed by the holder 14. Surface insulative films of the end part of the lead wire 4 has previously peeled off, and thereby the conductor-wires (core wires) 4a of the lead wires 4 are exposed. The conductor-wires 4a of the lead wires 4 are fixed on the wire-clip part 3a of the terminals 3, respectively. Therefore, the coils 1 and the lead wires 4 are electrically connected by way of the terminal 3. As the conductor-wires 4a of the lead wires 4 and the wire-clip parts 3a of the terminals 3 are mechanically connected by clip, the clip part of the lead wire 4 and the terminal 3 has sufficient mechanical strength against the pressure of the resin which is to be injected for forming the resin-molding 15 shown in FIG.1. Furthermore, since the wire-connecting configuration of resin-molded stepping motor in accordance with the present invention uses no printed circuit substrate, it has sufficient reliability against a severe heat-stress or temperature change in a circumference actually used.

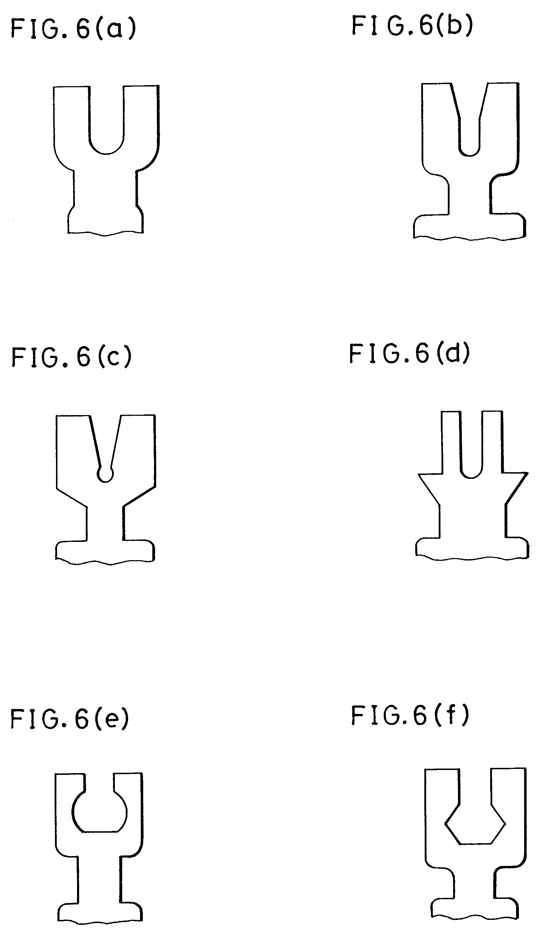

FIGs. 6(a) to 6(f) are front views showing other embodiments of the terminals 3. The terminals 3 shown in FIGs. 6(a) to 6(f) perform substantially the same effect of as those of the above-mentioned embodiment shown in FIGs. 1 to 5.

Although the present invention has been described in terms of the presently preferred embodiments, it is to be understood that such disclosure is not to be interpreted as limiting. Various alterations and modifications will no doubt become apparent to those skilled in the art after having read the above disclosure. Accordingly, it is intended that the appended claims be interpreted as covering all alterations and modifications as fall within the true spirit and scope of the invention.

**Claims**

1. Wire-connecting configuration of a resin-molded stepping motor comprising:

   at least one bobbin (2) having a circular center hole wherein a rotor is to be borne rotatively;

   at least one coil (1) wound around said bobbin; and

   at least two terminals (3) which are fixed on said bobbin and have a wire winding part (3b), whereto end of a wire (1a) of said coil (1) is wound and electrically connected, and a wire-clip part (3a), whereto conductor-wire (4a) of a lead wire (4) is fixed and electrically connected.

2. Wire-connecting configuration of a resin-molded stepping motor in accordance with claim 1, wherein

   said terminals (3) are press-fit to a flange (2a) of said bobbin (2).

3. Wire-connecting configuration of a resin-molded stepping motor in accordance with claim 1, wherein

   said terminals (3) are molded integrally with a flange (2a) of said bobbin (2).

F I G .1

# FIG. 2

FIG.3

FIG.4

FIG.5

FIG. 6(a)

FIG. 6(b)

FIG. 6(c)

FIG. 6(d)

FIG. 6(e)

FIG. 6(f)

# FIG.7 (Prior Art)

FIG.8 (Prior Art)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 310 289 (BERGER LAHR GMBH)<br>* page 4, line 1 - line 6 *<br>* page 5, line 18 - line 23 *<br>* page 9, line 11 - line 18; figures 6-10 * | 1,2 | H02K5/22<br>H02K37/14 |
| Y | | 3 | |
| Y | EP-A-0 174 512 (SIEMENS AG)<br>* page 5, line 11 - line 19; figures 1-4 * | 3 | |
| A | DE-U-8 428 471 (SIEMENS AG)<br>* page 3, line 26 - line 33 *<br>* page 4, line 16 - page 5, line 13; figures 5,6 * | 2 | |
| A | EP-A-0 289 043 (MINEBEA CO.,LTD.)<br>* column 5, line 35 - line 48; figure 5 * | 1 | |
| A | PATENT ABSTRACTS OF JAPAN<br>vol. 11, no. 17 (E-471)(2464) 17 January  1987<br>& JP-A-61 189 165 ( MATSUSHITA ELECTRIC IND. CO.,LTD. ) 22 August 1986<br>* abstract * | 1 | TECHNICAL FIELDS SEARCHED (Int. Cl.5)<br><br>H02K |

The present search report has been drawn up for all claims

| Place of search | Date of completion of the search | Examiner |
|---|---|---|
| BERLIN | 24 SEPTEMBER 1992 | LEOUFFRE M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)